Europäisches Patentamt

European Patent Office

Office européen des brevets

(19)

(11) Numéro de publication: **0 277 380 B1**

## (12) FASCICULE DE BREVET EUROPEEN

(45) Date de publication de fascicule du brevet:
06.11.91

(51) Int. Cl.⁵: **H04B 7/24**, H04B 7/185

(21) Numéro de dépôt: 87202493.0

(22) Date de dépôt: **14.12.87**

(54) **Procédé de réglage du retard entre stations de transmission d'informations par A.M.R.T. et système pour lequel est mis en oeuvre un tel procédé.**

(30) Priorité: **19.12.86 FR 8617862**

(43) Date de publication de la demande:
**10.08.88 Bulletin 88/32**

(45) Mention de la délivrance du brevet:
**06.11.91 Bulletin 91/45**

(84) Etats contractants désignés:
**CH DE FR GB IT LI SE**

(56) Documents cités:
**GB-A- 2 095 516**

**N.E.C. RESEARCH AND DEVELOPMENT, no. 76, janvier 1985, pages 24-35, Tokyo, JP; T. HIYAMA et al.: "Digital radio concentrator system (DRCS)"**

**COMMUNICATION & TRANSMISSION, vol. 7, no. 2, 1985, pages 5-22, Paris, FR; C. BAREYT et al.: "Accès multiple à répartition dans le temps à 120 Mbit/s: un nouveau terminal pour les systèmes de télécommunications par satellite"**

(73) Titulaire: **TELECOMMUNICATIONS RADIOE-LECTRIQUES ET TELEPHONIQUES T.R.T. 88, rue Brillat Savarin F-75013 Paris(FR)**

(84) Etats contractants désignés:
**CH DE GB IT LI SE**

Titulaire: **TRT TELECOMMUNICATIONS RA-DIOELECTRIQUES ET TELEPHONIQUES 88 rue Brillat Savarin F-75013 Paris(FR)**

(84) Etats contractants désignés:
**FR**

(72) Inventeur: **Le Goffic, Yves Société Civile S.P.I.D. 209, rue de l'Université F-75007 Paris(FR)**
Inventeur: **Tanguy, René Société Civile S.P.I.D. 209, rue de l'Université F-75007 Paris(FR)**

(74) Mandataire: **Chaffraix, Jean et al**
**Société Civile S.P.I.D. 156, Boulevard Haus-**
**smann**
**F-75008 Paris(FR)**

## Description

La présente invention concerne un procédé de réglage du retard entre stations dans un système de transmission d'informations utilisant dans un sens de transmission le principe dit d'A.M.R.T., système de transmission constitué par un réseau comprenant une station principale et des stations secondaires parmi lesquelles des stations relais en cascade, les stations secondaires disposant de moyens MD pour décaler les instants d'émission des informations émises sous forme de bits vers la station principale, la station principale disposant de moyens MR pour repérer l'ordre d'arrivée desdites informations, chaque station disposant, entre autres, d'au moins une base de temps émission et une base de temps réception.

Un procédé de réglage du retard entre stations dans un tel système de transmission d'informations est décrit dans le brevet français n° 2 502 426. Ainsi dans le système de transmission d'informations, dans le sens de transmission stations secondaires vers station principale les informations sont transmises selon le principe dit d'A.M.R.T. (Accès Multiple à Répartition dans le Temps). Une station secondaire n'émet que si une tranche de temps lui a été affectée et dans cette tranche de temps une station et une seule est autorisée à émettre. Toutes les stations secondaires sont synchrones de la station principale et la résolution des problèmes relatifs à la synchronisation est essentielle pour éviter à la réception à la station principale le chevauchement d'informations provenant des différentes stations secondaires. Pour résoudre ces problèmes de synchronisation, dans les stations secondaires, il est prévu des moyens pour décaler les instants d'émission des informations émises, la station principale étant pourvue de moyens pour repérer si les informations arrivent correctement positionnées dans le temps.

Les problèmes de synchronisation sont ainsi résolus, cependant lorsqu'une station secondaire est très éloignée de la station principale, un inconvénient reste à surmonter, car il est alors nécessaire d'intercaler un grand nombre de stations relais en cascade, stations relais qui peuvent bien entendu être elles aussi raccordées à des abonnés. Or chaque station relais doit récupérer l'horloge du débit d'informations provenant de la station principale et utiliser cette horloge pour réémettre à son tour, ce qui, dans le cas d'un nombre important de stations relais peut engendrer des déphasages amenant à des sauts de plusieurs bits. En effet, la réception des informations provenant des stations situées au-delà se fait en récupérant l'horloge dans le débit d'informations reçues, et la phase de cette horloge par rapport à celle de la station est quelconque car elle est fonction de la distance entre stations et peut évoluer sous l'influence de certains phénomènes tels que des variations de température. Si, dans une configuration initiale, les deux horloges sont presque en phase, une très légère variation de phase peut se traduire par un décalage d'un bit, et lorsqu'il y a plusieurs stations relais en cascade, le décalage peut atteindre plusieurs bits.

La présente invention propose un procédé, qui appliqué aux moyens décrits dans le préambule permet d'éviter l'inconvénient précité.

Pour cela et dans le but de conserver une précision supérieure au bit, un tel procédé est remarquable en ce qu'il est appliqué aux moyens pour décaler les instants d'émission des informations émises coopérant avec les moyens pour repérer l'ordre d'arrivée desdites informations pour le réglage du retard à apporter aux bases de temps émission des différentes stations, le réglage initial à la station principale du retard de chaque station étant effectué au bit près, le retard étant ensuite à la station secondaire majoré par pas de

$$\frac{1}{2n-1}$$

bit jusqu'à l'obtention d'un saut de 1 bit puis étant minoré de n pas pour le réglage idéal entre stations, le nombre n étant strictement supérieur à 1. Ce mode de réglage évite des sauts accidentels de 1 bit lors de la traversée des relais, tant que la gigue sur le signal reçu est inférieure à

$$\pm \frac{n-1}{2n-1}$$

bit. En effet, grâce à ce procédé il est certain que les phases entre station principale et station secondaire ne sont pas voisines puisqu'il est imposé un écart de

$$\frac{n}{2n-1}$$

bit ce qui autorise une variation de

$$\pm \frac{n-1}{2n-1}$$

bit sans provoquer de saut d'information.

D'autre part, le procédé de réglage du retard entre stations est remarquable en ce que, pour le réglage du retard d'une station secondaire échangeant des informations avec la station principale au travers d'une cascade de stations relais, ledit procédé est successivement et dans un ordre déterminé appliqué aux moyens MD pour décaler les instants d'émission des informations émises des différentes stations en cascade coopérant avec les moyens MR pour repérer l'ordre d'arrivée desdites informations à la station principale, en commençant dans l'ordre par la station relais la plus proche de la station principale puis la station relais immédiatement suivante et ainsi de suite pour terminer par la station secondaire concernée. Ainsi le contrôle du calage d'une station secondaire s'effectue à la station principale où la mesure est toujours réalisée au bit près. Les indications de retard d'une station secondaire tiennent compte de sa distance et du temps de traversée des différents relais et c'est par contre au niveau des stations secondaires que le décalage imposé est à

$$\frac{1}{2n-1}$$

bit près. Comme le réglage se fait de proche en proche, il est assuré que le réglage idéal de la station secondaire est effectué sans risque de saut d'informations et ceci quel que soit le nombre de stations relais intercalées entre la station principale et la station secondaire concernée.

La description suivante, faite en regard des dessins annexés, le tout donné à titre d'exemple, fera bien comprendre comment l'invention peut être réalisée.

La figure 1 présente de manière schématique un système de transmission d'informations pour lequel est mis en oeuvre le procédé selon l'invention.

La figure 2 représente un exemple d'organisation des trames.

La figure 3 présente le procédé de réglage du retard entre stations.

La figure 4 représente le schéma de principe simplifié d'une station principale.

La figure 5 représente le schéma de principe simplifié d'une station secondaire.

La figure 6 présente un exemple de décalage pouvant se produire dans un système de transmission lorsque le procédé selon l'invention n'est pas appliqué.

La figure 7 montre comment lorsque le procédé selon l'invention est appliqué un décalage peut être évité.

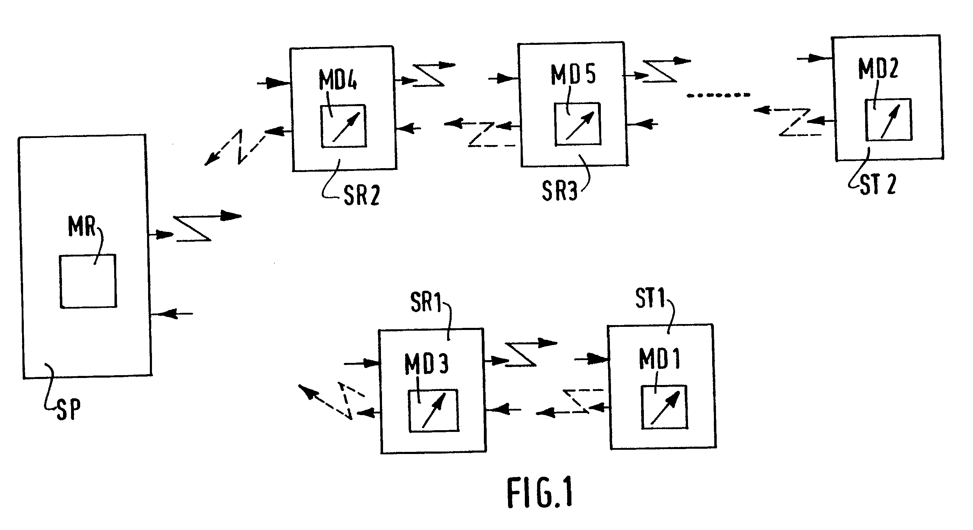

Sur la figure 1 est présenté de manière schématique un système de transmission d'informations pour lequel est mis en oeuvre le procédé selon l'invention. Pour le raccordement d'abonnés téléphoniques situés dans de vastes régions à faible densité de population, il est avantageux d'utiliser des concentrateurs téléphoniques. Dans un tel système de transmission d'informations par voie radio, qui est du type point-multipoint, le réseau est constitué par une station principale SP située près du central de rattachement et par plusieurs stations secondaires (stations terminales ST1, ST2,..., stations relais SR1, SR2, SR3,...) situées dans les zones où se trouvent les abonnés. En effet, la station principale peut dialoguer directement avec une station terminale, cependant lorsque la distance entre ces deux stations est importante, il est courant d'intercaler une, voire plusieurs stations relais (cas de la figure 1).

La transmission dans le sens station principale vers stations secondaires se fait par diffusion, la station principale émet vers toutes les stations secondaires. La transmission, dans ce sens, peut ainsi s'effectuer selon un multiplex temporel conventionnel, les flèches en trait continu symbolisant sur la figure 1 ce mode de transmission.

Dans le sens stations secondaires vers station principale, la transmission utilise le procédé A.M.R.T. (Accès Multiple à Répartition dans le Temps), ce mode de transmission est sur la figure 1 symbolisé par les flèches en trait discontinu. Une station secondaire ne peut transmettre d'informations que pendant la tranche de temps qui lui a été affectée et pendant cette tranche de temps seule cette station est autorisée à émettre. Avec ce procédé, toutes les stations secondaires sont synchrones de la station principale et cette synchronisation s'avère être un problème fondamental à résoudre. En effet les stations secondaires doivent émettre leurs informations de telle sorte que celles-ci ne se chevauchent pas à leur arrivée à la station principale.

Une solution à ce problème consiste à munir les stations secondaires ST1, ST2,...,SR1, SR2, SR3,... respectivement, de moyens MD1, MD2,..., MD3, MD4, MD5,..., pour décaler les instants d'émission et la station principale SP de moyens MR pour repérer l'ordre d'arrivée des informations émises.

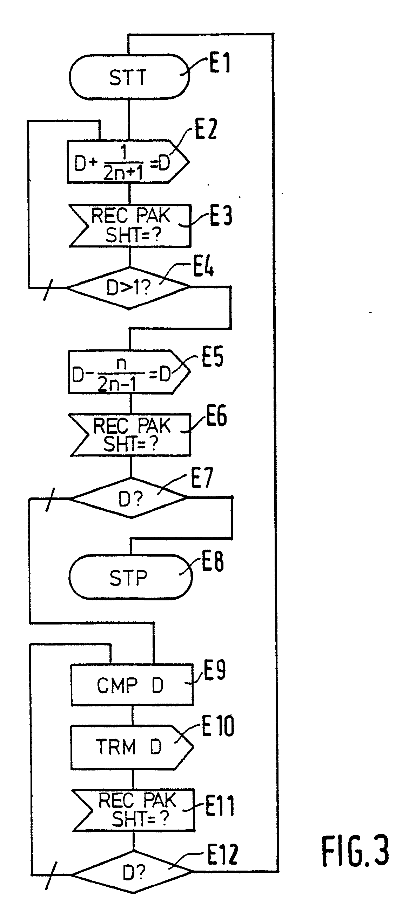

Dans le procédé qui est décrit à la figure 3, la station principale observe périodiquement la position des informations émises par les différentes stations secondaires, mesure le retard à l'arrivée desdites informations et renvoie vers les stations secondaires, en tenant compte de la traversée de la(des) station(s) relais, des indications leur permettant de recaler correctement ce retard.

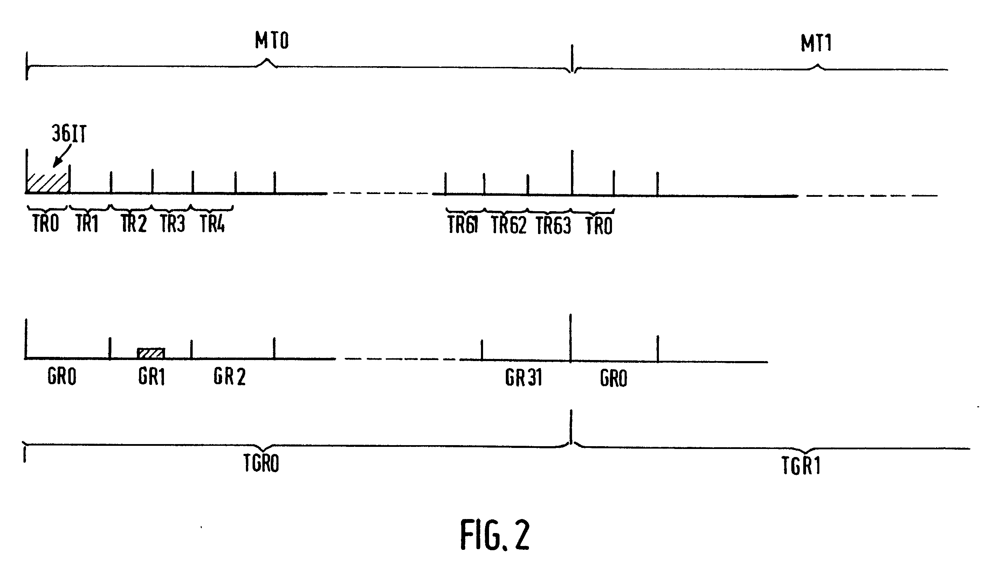

La figure 2 représente un exemple d'organisation des trames pour une meilleure appréhension du sujet de l'invention.

La transmission d'informations dans le sens station principale vers stations secondaires s'effectue selon un multiplex organisé par exemple de la façon suivante :

- une trame TR est composée de 36 intervalles de temps repérés de IT0 à IT35, chaque intervalle de temps transportant un octet.

- une multitrame MT est composée de 64 trames repérées TR0 à TR63.
- une supermultitrame SMT est composée de 128 multitrames (dans le cas où 128 stations sont en service), les multitrames étant repérées MT0 à MT127.

Chaque intervalle de temps transporte un débit de 64 kbit/s, le débit du multiplex est donc de 2,304 Mbit/s.

Chaque trame transporte 30 circuits d'informations dans les IT2 à IT31, les IT32 à 35 étant inutilisés.

L'IT0 transporte des motifs de synchronisation permettant de repérer les différents IT dans une trame,

L'IT1 est utilisé de la manière suivante :
- dans les trames de rang 4n + 2 (2,6,10,14,...), canal sémaphore CS à 16 kbit/s pour le dialogue entre la station principale et les stations terminales.
- dans les trames de rang 2n + 1 (1,3,5,7,...), signalisation voie par voie V/V relative au circuit de rang n.
- dans les trames de rang 4n (0,4,8,12,...), motifs de synchronisation S permettant de repérer les différentes trames et multitrames dans la supermultitrame et dans la multitrame de rang m, la voie de données destinée à la station numérotée m.

La durée d'une trame est donc, dans cet exemple, de 125 µs, celle d'une multitrame de 8 ms et celle de la supermultitrame de 1,024 s.

Dans le sens stations secondaires vers station principale la transmission d'informations se fait dans des tranches de temps repérées de GR0 à GR31. Chaque tranche de temps comporte un temps de garde pendant lequel il n'y a pas d'émission et qui autorise donc une incertitude sur le temps d'arrivée des informations au niveau de la station principale. Pour diminuer l'influence du temps de garde sur le rendement du débit de transmission chaque tranche de temps GR comprend 72 octets.

Les tranches de temps GR2 à GR31 peuvent être utilisées par chacune des stations secondaires, à condition que la station principale les ait affectées. Chacune contient un paquet de 72 octets, constitué de la manière suivante :
- un octet de temps de garde où il n'y a pas d'émission.
- 5 octets de rythme permettant de récupérer l'horloge à la réception.
- un octet de repère de début de paquet RDP.
- un octet de signalisation voie par voie.
- 64 octets d'informations correspondant à la mise en paquet de 8 ms de parole.

La tranche de temps GR0 est réservée à un canal sémaphore à 16 kbit/s qui peut être pris de manière aléatoire par chacune des stations. Ce paquet est constitué par :
- un octet de temps de garde où il n'y a pas d'émission.
- 5 octets de rythme pour la récupération de l'horloge à la réception.
- un octet de repère de début de paquet RDP.
- un octet inutilisé.
- 16 octets transportant le canal sémaphore.
- 48 octets inutilisés.

La tranche de temps GR1 est prise successivement par chacune des stations. A cet effet il y a donc 128 trames repérées TGR0 à TGR127 comprenant chacune 32 tranches de temps GR.

La transmission se faisant à 2,304 Mbit/s, une tranche de temps GR dure 250 µs. Chaque trame dure donc 8 ms et l'ensemble des 128 trames dure 1,024 s.

A la figure 3 est décrit le procédé de réglage du retard entre stations dans un système de transmission d'informations utilisant dans un sens de transmission le principe dit d'A.M.R.T., Ce système de transmission étant constitué par un réseau comprenant une station principale et des stations secondaires parmi lesquelles des stations relais en cascade, les stations secondaires disposant de moyens MD pour décaler les instants d'émission des informations émises sous forme de bits vers la station principale, la station principale disposant de moyens MR pour repérer l'ordre d'arrivée desdites informations, chaque station disposant, entre autres, d'au moins une base de temps émission et une base de temps réception.

Ainsi, chaque station secondaire comporte des moyens MD pour décaler les instants d'émission pour ajuster le retard et permettant de décaler la base de temps émission de la station par rapport à la base de temps réception de manière à ce que les informations émises dans les tranches de temps GR arrivent correctement calées à la station principale.

La station principale comporte des moyens MR pour repérer l'ordre d'arrivée des informations et pour mesurer les retards de transmission des stations secondaires. Pour cela, chaque station secondaire émet donc au milieu de la tranche de temps GR1 qui lui est attribuée le mot repère RDP. La station principale repère le moment d'arrivée du mot RDP et renvoie vers la station secondaire des indications lui permettant de recaler correctement le retard. A cet effet, il est prévu, dans le sens multiplex (station principale vers stations secondaires), un intervalle de temps, par multitrame, pour retransmettre la mesure du retard. Dans la multitrame de rang m, cet intervalle de temps ou voie de données est destiné à la station numérotée m.

Conformément à l'invention, le procédé est remarquable en ce qu'il est appliqué aux moyens pour décaler les instants d'émission des informations émises, coopérant avec les moyens pour repérer l'ordre d'arrivée desdites informations pour le réglage du retard à apporter aux bases de temps émission des différentes stations, le réglage initial à la station principale du retard de chaque station étant effectué au bit près, le retard étant ensuite à la station secondaire majoré par pas de

$$\frac{1}{2n-1}$$

bit jusqu'à l'obtention d'un saut de 1 bit puis minoré de n pas pour le réglage idéal du retard entre stations, le nombre n étant strictement supérieur à 1.

Ainsi le réglage initial du retard se fait au bit près. Chaque tranche de temps GR comporte, comme cela a été décrit précédemment, un octet de temps de garde pendant lequel il y a absence d'émission, ce qui autorise une plage de réglage de ± 4 bits sans qu'il y ait de chevauchement entre les paquets.

Les stations relais intercalées entre la station principale et les stations terminales disposent, comme montré sur la figure 1, de moyens MD pour décaler leurs instants d'émission. Elles retransmettent vers les stations terminales le multiplex provenant de la station principale. Dans l'autre sens de transmission, elles retransmettent vers la station principale les différents paquets reçus. Pour cela, la station relais recherche la présence du mot RDP dans des créneaux de temps de 8 bits pour les tranches de temps GR0 et GR2 à GR31 et dans un créneau de temps de 72 octets pour la tranche de temps GR1. Lorsque le mot RDP est détecté, elle retransmet le paquet correspondant décalé du temps nécessaire à la reconnaissance de ce mot RDP et à l'émission des cinq octets de rythme qui précèdent le mot RDP. Les paquets sont réémis dans leur ordre d'arrivée sans être recalés par rapport à la base de temps émission de la station.

Le contrôle du calage d'une station terminale s'effectue à la station principale. Les indications de retard d'une station tiennent compte de sa distance et du temps de traversée des différents relais.

Selon une caractéristique de l'invention, le procédé de réglage du retard entre stations, pour le réglage du retard d'une station secondaire échangeant des informations avec la station principale au travers d'une cascade de stations relais, est successivement et dans un ordre déterminé appliqué aux moyens MD pour décaler les instants d'émission des informations émises des différentes stations en cascade coopérant avec les moyens MR pour repérer l'ordre d'arrivée desdites informations à la station principale, en commençant dans l'ordre par la station relais la plus proche de la station principale puis la station relais immédiatement suivante et ainsi de suite pour terminer par la station secondaire concernée.

Le calage d'une station m s'opère en utilisant également dans la multitrame de rang m du multiplex, l'intervalle de temps ou voie de données destiné à ladite station m, une caractéristique de l'invention consiste à transmettre dans cette voie de données des informations telles que :

- une télécommande interdisant toute émission à ladite station m lorsqu'elle n'est pas en service.
- une télécommande autorisant uniquement l'émission d'un paquet de taille réduite (5 octets de rythme + le mot RDP), lorsqu'il est procédé au réglage du retard de la station m, et ceci dans la tranche de temps GR qui lui est impartie.
- une télécommande autorisant la station m à émettre normalement lorsque le retard est correctement réglé.

Dans le procédé de réglage du retard selon l'invention décrit à la figure 3, l'état E1 est l'état initial STT: la station est réglée au bit près. A l'état E2 à la station le retard D est augmenté d'un pas de

$$\frac{1}{2n-1}$$

bit, alors que le paquet de taille réduite PAK est reçu à la station principale à l'état E3 de même qu'est effectuée la mesure du décalage (SHT) au bit près. A l'état E4 est posée une question :
"Un saut de 1 bit s'est-il produit?" Si la réponse est non l'état suivant est de nouveau l'état E2 où le retard est augmenté d'un autre pas de

$$\frac{1}{2n-1}$$

bit puis suivent les états E3 et E4 et ceci jusqu'à ce que la réponse à la question posée à l'état E4 soit oui. Lorsque la réponse à l'état E4 est oui, à l'état suivant E5 le retard est diminué de n pas donc de

$$\frac{n}{2n-1}$$

bit alors que le paquet de taille réduite est reçu à la station principale à l'état E6 de même qu'est effectuée la mesure du décalage au bit près. A l'état E7 est posée la question suivante "Le retard au bit près est-il correct?" Si la réponse est oui la station est déclarée correctement calée (STP) à l'état E8. Si par contre la réponse est non le calcul (CMP) du nouveau retard est effectué à l'état E9 puis le résultat du calcul du nouveau retard envoyé (TRM) à l'état E10. Quand le paquet de taille réduite est reçu à la station principale à l'état E11 la mesure du décalage au bit près est effectuée alors qu'à l'état E12 est de nouveau posée la question : "Le retard au bit près est-il correct?" Si la réponse est oui il y a passage à l'état E1 puis aux états suivants déjà décrits jusqu'à ce que la station soit déclarée correctement calée. Si la réponse à la question posée à l'état E12 est non il y a retour à l'état E9 pour un calcul du nouveau retard puis passage par les états suivants et ceci jusqu'à ce que la station soit déclarée correctement calée.

Ainsi, selon. le procédé décrit et en choisissant n, pour un exemple non limitatif, égal à 2 (n>1), le réglage du retard est réalisé de la manière suivante. Le retard est d'abord réglé au bit près, la mesure du retard à la station principale se faisant toujours au bit près. Lorsque la mesure du temps d'arrivée des paquets de taille réduite à la station principale indique que la station est correctement calée au bit près, l'émission de la station à régler est décalée 1/3 de bit par 1/3 de bit

$$\left( \frac{1}{2n-1} = \frac{1}{3} \right)$$

jusqu'à l'obtention d'un saut de 1 bit (le retard étant augmenté de 1/3 de bit, puis éventuellement de 2/3 bit ou de 1 bit). Dès que ce saut de 1 bit est provoqué, le retard est diminué de 2/3 de bit

$$\left( \frac{n}{2n-1} = \frac{2}{3} \right).$$

Dans ces conditions, le retard de la station est ainsi avantageusement et infailliblement réglé de telle façon que l'horloge des données reçues soit située dans une plage séparée d'au moins ± 1/3 de bit du front montant de l'horloge de la station, autorisant de la sorte une variation du retard de ± 1/3 de bit sans décalage des données.

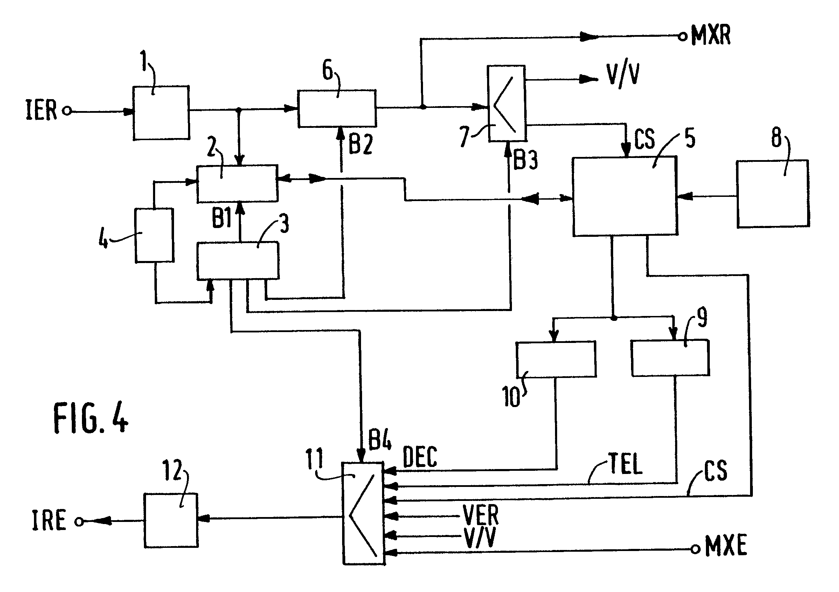

La figure 4 représente le schéma de principe simplifié d'une station principale.

Le récepteur 1 transmet les informations IER provenant des différentes stations secondaires. Un dispositif de mesure du décalage 2, commandé par la base de temps 3 de la station au moyen des signaux B1, permet de mesurer l'écart entre le moment d'arrivée d'un paquet dans la tranche de temps GR1 et le moment où ce paquet devrait théoriquement arriver. Le circuit de mesure du décalage est essentiellement constitué d'un registre à décalage qui décale les informations au rythme de l'horloge distante récupérée, d'un circuit décodeur qui recherche la présence de l'octet de repère de début de paquet RDP et d'un compteur de bits qui compte le nombre de bits du décalage entre le moment d'arrivée réel de cet octet RDP et son arrivée théorique. Le circuit de mesure du décalage 2 et la base de temps 3 sont reliés au circuit 4 générant l'horloge locale de la station. Un calculateur 5 a accès au dispositif de mesure du décalage 2. La sortie du récepteur 1 est également reliée à un dispositif d'alignement 6, commandé par la base de temps 3 au moyen du signal B2, dispositif d'alignement 6, connu en soi, qui permet, à partir de la détection de la présence des octets de repère de début de paquet RDP, de délivrer sur le bus MXR le flot d'informations régulièrement positionnées dans les différentes tranches de temps GR, le bus MXR étant destiné aux équipements reliés à la station.

La base de temps 3 commande au moyen du signal B3 un démultiplexeur 7 à l'entrée duquel est reliée la sortie du dispositif d'alignement 6, démultiplexeur 7 qui permet d'extraire les signalisations voie par voie V/V ainsi que le canal sémaphore CS destiné au calculateur 5.

Le calculateur 5 détermine les télécommandes à envoyer aux stations secondaires ainsi que les valeurs du décalage qu'elles doivent appliquer à leur base de temps émission à partir d'une part de commandes transmises, par exemple par un opérateur au moyen d'un terminal d'exploitation 8 et d'autre part des informations de décalage recueillies auprès du circuit de mesure du décalage 2. Ces télécommandes ainsi que ces valeurs de décalage, déterminées par le calculateur 5 sont mémorisées respectivement dans le circuit de télécommande 9 et dans le circuit de décalage 10 puis sont transmises dans les différentes voies de données. Un multiplexeur 11, commandé par la base de temps 3 au moyen du signal B4, permet de délivrer à un émetteur 12 un multiplex IRE qui regroupe les signalisations voie par voie V/V, le canal sémaphore CS émis par le calculateur 5, les informations de verrouillage de trame et de multitrame VER, les informations MXE émises par les équipements raccordés à la station et les informations de télécommande TEL et de valeur du décalage DEC élaborées par le calculateur. Les circuits 2, 5, 9, 10 et le terminal d'exploitation 8 constituent les moyens pour repérer l'ordre d'arrivée des informations référencés MR sur la figure 1. Le réglage des stations secondaires au bit près et le contrôle du calage de celles-ci sont effectués à la station principale.

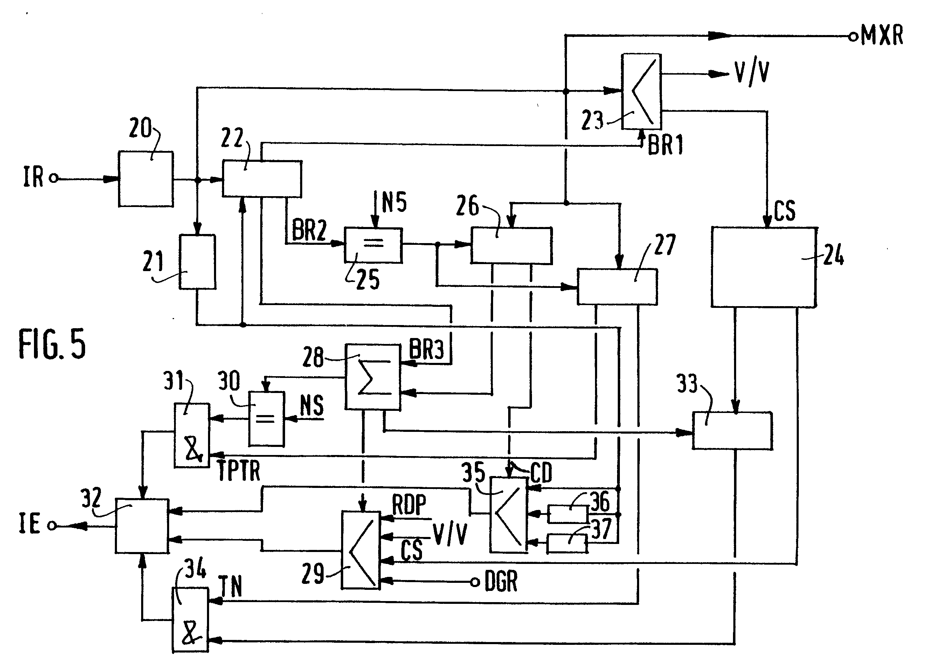

La figure 5 représente le schéma de principe simplifié d'une station secondaire où le réglage du retard au 1/3 de bit près (pour n = 2) est effectué.

A la station secondaire les informations IR sont reçues par le récepteur 20. A l'aide des informations présentées à la sortie du récepteur 20 et d'un circuit récupérateur d'horloge 21 est reconstituée la base de temps de réception 22. Les informations de sortie du récepteur sont présentées à l'entrée d'un démultiplexeur 23 qui est commandé par le signal BR1 émis par la base de temps 22. La sortie du récepteur transmet de même les informations vers le bus MXR. A la sortie du démultiplexeur sont extraites les signalisations voie par voie V/V, alors que le canal sémaphore CS est aiguillé vers un calculateur 24. A partir du numéro NS affecté à la station un circuit comparateur 25 permet au moyen du signal BR2 émis par la base de temps 22 d'extraire les informations présentes à la sortie du récepteur 20 relatives au décalage et mémorisées par le circuit de décalage 26 et les informations relatives aux télécommandes et mémorisées par le circuit de télécommande 27. La base de temps 28 utilisée pour cadencer l'émission est déduite de la base de temps réception 22, signal BR3, en ajoutant le décalage indiqué par la station principale et mémorisé dans le circuit 26 au moyen d'un circuit additionneur inclus dans la base de temps émission 28. Cette base de temps 28 commande un multiplexeur 29 permettant d'insérer le mot de repère de début de paquet RDP, la signalisation voie par voie V/V, le canal sémaphore CS présent à l'une des sorties du calculateur 24 et les informations DGR provenant des équipements raccordés à la station. L'instant d'émission du paquet de taille réduite dans la tranche de temps GR1 est déterminé grâce à un circuit comparateur 30 qui détecte la coïncidence entre le numéro NS affecté à la station et l'état de la base de temps 28. L'émission de ce paquet de taille réduite est validée par la télécommande TPTR autorisant l'émission du paquet de taille réduite, ce signal de validation étant présent à la sortie du circuit 27. Ainsi la sortie du circuit comparateur 30 est appliqué à une entrée d'une porte ET31 qui lorsqu'elle reçoit sur sa deuxième entrée le signal de validation TPTR, autorise l'émission du paquet de taille réduite présent à la sortie du multiplexeur 29 par l'émetteur 32. L'émission des données dans les autres tranches de temps GR est commandée à partir d'une mémoire 33 dans laquelle le calculateur a indiqué les tranches de temps qui ont été affectées à la station pour écouler le trafic.

Les données présentes à la sortie du multiplexeur 29 sont émises par l'émetteur 32 lorsque celui-ci est autorisé à émettre. L'autorisation d'émission des informations IE est fournie par la sortie d'une porte ET 34 recevant sur l'une de ses entrées la commande de la mémoire 33 lorsque sur sa deuxième entrée est appliquée la télécommande TN autorisant l'émission normale. En cas de réception d'une télécommande interdisant l'émission, la station ne peut bien entendu pas émettre.

L'émission des informations dans les différentes tranches de temps GR se fait soit avec l'horloge récupérée 21, soit avec cette horloge décalée de 1/3 de bit ou de 2/3 de bit. A cet effet on dispose d'un multiplexeur 35 permettant de faire le choix entre ces trois horloges, le signal du circuit récupérateur d'horloge 21 étant appliqué à une première entrée du multiplexeur 35, à une seconde entrée du multiplexeur 35 après avoir été décalé de 1/3 de bit, par exemple, au moyen d'une ligne à retard 36 et à une troisième entrée du multiplexeur 36 après avoir été décalé de 2/3 de bit, par exemple, au moyen d'une ligne à retard 37. Le multiplexeur 35 est commandé par le signal CD présent à une sortie du circuit de décalage 26, signal CD relatif aux informations de retard transmises par la station principale. La sortie du multiplexeur 35 est reliée à l'émetteur 32 permettant à celui-ci d'émettre les informations sans décalage, avec un décalage de 1/3 de bit, ou avec un décalage de 2/3 de bit. Les circuits 25, 26, 27, 28, 30, 31, 33, 34, 35, 36 et 37 constituent les moyens pour décaler les instants d'émission référencés MD sur la figure 1.

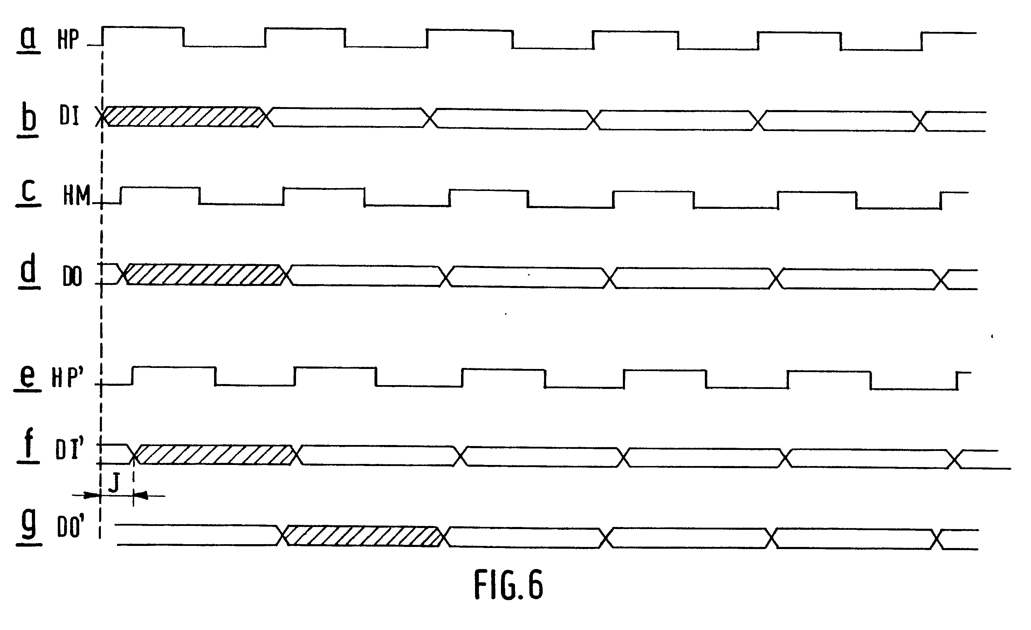

Sur la figure 6 est proposé un exemple de décalage pouvant se produire dans un système de transmission lorsque le procédé selon l'invention n'est pas appliqué.

Le réglage initial du retard à la station principale se fait au bit près, or dans la traversée d'une station relais, la réception d'un paquet est opérée avec l'horloge extraite du paquet reçu, horloge qui provient donc de la station immédiatement précédente. L'émission de ce paquet vers la station principale est par contre effectuée avec l'horloge du relais qui est celle du multiplex provenant de la station principale. Ces deux horloges sont à la même fréquence mais leurs phases peuvent être différentes, en effet le déphasage dépend de la distance entre la station relais et la station immédiatement précédente. De plus ces deux horloges peuvent être affectées de gigue l'une par rapport à l'autre et donc, selon leur phase, une gigue peu importante peut se traduire par un décalage de un bit lors de la traversée de la station relais. Ce phénomène est réprésenté sur la figure 6.

A la ligne a est représentée l'horloge extraite du paquet de données reçu HP à un instant donné, alors que la ligne b symbolise les données DI du paquet reçu. L'horloge de la station relais HM extraite du multiplex émis par la station principale est représentée à la ligne c, c'est avec cette horloge HM que sont réémises les données DO vers la station principale. Si à un autre instant un léger décalage se produit, décalage mis en évidence à la ligne e représentant l'horloge extraite du paquet de données reçu HP' et à la ligne f symbolisant les données DI' du paquet reçu, les données DO' sont alors réémises (toujours selon l'horloge HM) avec un décalage de 1 bit comme indiqué à la ligne g. La gigue J affectant les horloges HP et HM l'une par rapport à l'autre est représentée à la ligne f.

Ainsi lorsque plusieurs stations relais en cascade sont intercalées entre une station terminale et la station principale, il peut arriver que, compte tenu des distances entre stations relais, plusieurs de ces stations relais aient leur horloge de réception de paquet et leur horloge d'émission de paquet pratiquement en phase. Si, pour une raison quelconque, une variation de température par exemple, il se produit un décalage entre les horloges, cela peut se traduire brusquement par un décalage de plusieurs bits lors de la réception des données à la station principale provoquant alors un chevauchement des paquets de données.

Pour éviter ce phénomène, il est nécessaire d'effectuer un réglage plus précis du retard des stations, de manière à ce qu'une légère gigue ne puisse se traduire par un décalage de 1 bit lors de la traversée d'une station relais.

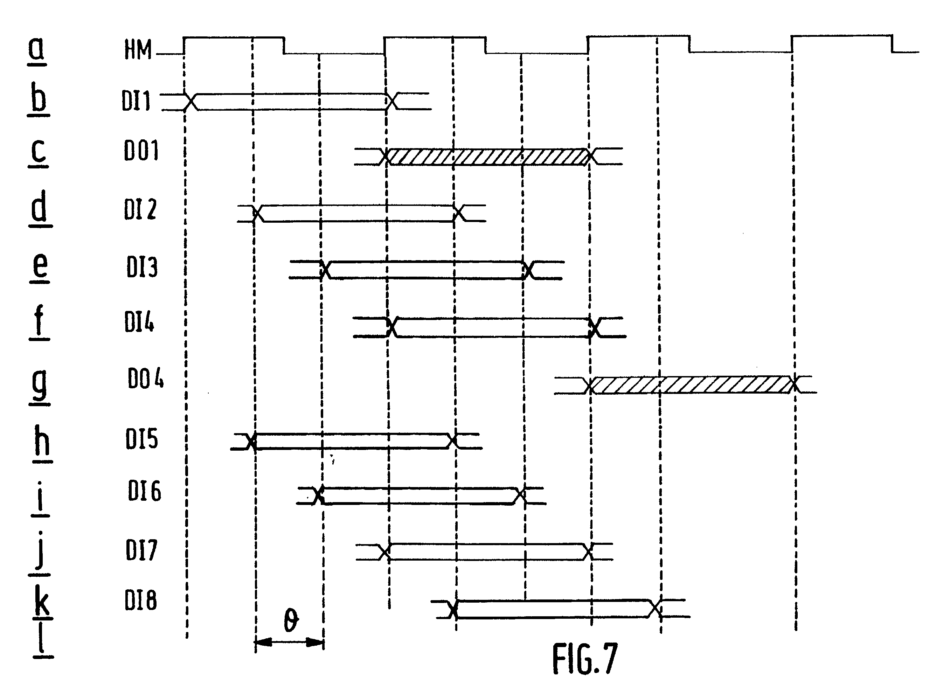

La figure 7 montre comment lorsque le procédé selon l'invention est appliqué un tel décalage peut être évité. Le mode de réglage adopté, réglage au 1/3 de bit, autorise à des variations de retard de ± 1/3 de bit sans décalage des données.

A la ligne a est représentée l'horloge HM qui sert à la réémission des données reçues. Sur la figure, sont considérés les cas extrêmes, où les données reçues sont légèrement en avance ou légèrement en retard par rapport à l'horloge HM.

A la ligne b sont reproduites des données DI1 légèrement en retard relativement à l'horloge HM. La réémission de ces données DO1 est proposée à la ligne c, ce temps d'émission (au bit près) est considéré comme exact pour la station principale. Si le retard des données de la ligne b est augmenté de 1/3 de bit (DI2, ligne d) ou de 2/3 de bit (DI3, ligne e), la réémission sera effectuée toujours conformément à la ligne c, invariablement considérée comme correcte, pour la station principale. Par contre, si le retard des données de la ligne b est augmenté de 1 bit (DI4, ligne f) la réémission de ces données DO4 (ligne g) sera effectuée avec un saut de 1 bit. Le réglage consiste alors à diminuer le retard de 2/3 de bit ce qui impose aux données reçues une position identique à celle occupée par les données de la ligne d. Un tel réglage autorise donc un décalage de 1/3 de bit vers la gauche et de presque 2/3 de bit vers la droite sans provoquer de saut inopportun.

A la ligne h sont représentées des données DI5 en avance relativement à l'horloge HM, ces données étant décalées de presque 1/3 de bit par rapport à celles de la ligne b. Si le retard de ces données est augmenté de 1/3 de bit (DI6, ligne i) ou de 2/3 de bit (DI7, ligne j), la réémission sera effectuée de manière correcte identiquement à la ligne c, les données présentes à la ligne j étant encore légèrement en avance par rapport à l'horloge locale HM. Si le retard est de nouveau majoré de 1/3 de bit (DI8, ligne k), la réémission des données se fera avec un saut de 1 bit identiquement à la ligne g. Le réglage doit être également effectué en diminuant le retard de 2/3 de bit, ce qui impose aux données reçues une position identique à celle occupée par les données de la ligne i. Ce réglage autorise donc un décalage de 1/3 de bit vers la droite et de presque 2/3 de bit vers la gauche sans provoquer de saut inopportun. A la ligne l est mise en évidence la plage de réglage θ du retard à imposer aux données pour une réémission sans défaut de celles-ci.

En procédant de cette manière, il est clair que quelle que soit la phase du signal de données reçu relativement à l'horloge d'émission HM, le temps d'arrivée du signal de données peut varier de ± 1/3 de bit sans provoquer de décalage de 1 bit.

Ce mode de réglage est avantageusement utilisé pour:

- régler le retard de la première station raccordée à la station principale : les données reçues arrivent correctement calées par rapport à l'horloge de la station principale.

- régler le retard des stations situées au-delà: les données reçues dans une station relais arrivent correctement calées relativement à l'horloge de la station relais. Or comme cette dernière est correctement calée par rapport à l'horloge de la station située devant, il en est de même pour les données réémises.

Un tel mode de réglage permet d'éviter des sauts accidentels de 1 bit, lors de la traversée des stations relais tant que la gigue est inférieure à ± 1/3 de bit (pour n = 2). De manière générale il est possible de tolérer une gigue de

$$\pm \frac{n-1}{2n-1}$$

bit sur le signal de données reçu sans engendrer de saut de 1 bit.

**Revendications**

1. Procédé de réglage du retard entre stations dans un système de transmission d'informations utilisant dans un sens de transmission le principe dit d'A.M.R.T., système de transmission constitué par un réseau comprenant une station principale et des stations secondaires parmi lesquelles des stations relais en cascade, les stations secondaires disposant de moyens MD pour décaler les instants d'émission des informations émises sous forme de bits vers la station principale, la station principale disposant de moyens MR pour repérer l'ordre d'arrivée desdites informations, chaque station disposant, entre autres, d'au moins une base de temps émission et une base de temps réception, procédé caractérisé en ce qu'il est appliqué aux moyens pour décaler les instants d'émission des informations émises coopérant avec les moyens pour repérer l'ordre d'arrivée desdites informations pour le réglage du retard à apporter aux bases de temps émission des différentes stations, le réglage initial à la station principale du retard de chaque station étant effectué au bit près, le retard étant ensuite à la station secondaire majoré par pas de

$$\frac{1}{2n-1}$$

bit jusqu'à l'obtention d'un saut de 1 bit puis étant minoré de n pas pour le réglage idéal du retard entre stations, le nombre n étant strictement supérieur à 1.

2. Procédé de réglage du retard entre stations selon la revendication 1 caractérisé en ce que, pour le réglage du retard d'une station secondaire échangeant des informations avec la station principale au travers d'une cascade de stations relais, ledit procédé est successivement et dans un ordre déterminé appliqué aux moyens MD pour décaler les instants d'émission des informations émises des différentes stations en cascade coopérant avec les moyens MR pour repérer l'ordre d'arrivée desdites informations à la station principale, en commençant dans l'ordre par la station relais la plus proche de la station principale puis la station relais immédiatement suivante et ainsi de suite pour terminer par la station secondaire concernée.

3. Procédé de réglage du retard entre stations, selon l'une des revendications 1 à 2, caractérisé en ce que sont transmises dans une voie de données destinée à la station dont le retard est à régler des informations telles que :
- une télécommande interdisant toute émission de ladite station
- une télécommande autorisant ladite station à émettre uniquement un paquet de taille réduite dans la tranche de temps qui lui est impartie.
- une télécommande autorisant ladite station à émettre normalement.

4. Système utilisant le procédé conforme à l'une des revendications 1 à 3, constitué par un réseau comprenant une station principale et des stations secondaires parmi lesquelles des stations relais en cascade, les stations secondaires disposant de moyens MD pour décaler les instants d'émission des informations émises sous forme de bits vers la station principale, la station principale disposant de moyens MR pour repérer l'ordre d'arrivée desdites informations, chaque station disposant, entre autres, d'au moins une base de temps émission et une base de temps réception, système caractérisé en ce que les moyens MD coopèrent avec les moyens MR de telle sorte qu'à la station principale le réglage initial du retard de chaque station secondaire soit effectué au bit près et qu'ensuite la valeur dudit retard imposée soit d'abord majorée par pas de

$$\frac{1}{2n-1}$$

bit jusqu'à l'obtention d'un sant de 1 bit et enfin minorée de μ pas pour le réglage idéal du retard entre stations, le nombre μ étant strictement supérieure à 1.

## Claims

1. Method of adjusting the interstation delay in an information transmission system utilizing in one transmission direction the TDMA method (Time Division Multiple Access), the transmission system being constituted by a network of a central station and a plurality of sub-stations which include relay stations arranged in cascade, the sub-stations comprising time-shifting means for shifting the instants at which the information bits are transmitted to the central station, the central station comprising detection means for detecting the order in which said information bits arrive, each station in the network comprising at least a transmit time-base and a receive time-base, characterized in that it is applied to a time-shifting means shifting the instants at which the information signals are transmitted with cooperates with the means for detecting the order in which said information signals arrive so as to adjust the delay to be allocated to the transmit time-bases of the various sub-stations while, at the central station, the initial adjustment of the delay for each sub-station is made with an accuracy of one bit period, the delay at the sub-station is then increased in steps of 1/(2n-1) bit period until a jump of 1 bit period is obtained, and then decreased by n steps for the optimum adjustment of the interstation delay, where n is an integer strictly greater than 1.

2. Method of adjusting the interstation delay as claimed in Claim 1, characterized in that for adjusting the delay of a sub-station exchanging information with the central station through a cascade arrangement of relay stations, said method is sequentially applied in a predetermined order to said time-shifting means for shifting the instants at which the information signals are transmitted from the different cascaded stations, which time-shifting means cooperates with the detection means for detecting the order in which said information signals arrive at the central station, commencing in said order with the relay station nearest to the central station, then the relay station immediately following etc., and ending with the sub-station involved.

3. Method of adjusting the interstation delay as claimed in one of the Claims 1 or 2, characterized in that on a data channel intended for the sub-station whose delay has to be adjusted, the following information signals are transmitted:
   - a remote-control signal prohibiting any transmission from the sub-station in question;
   - a remote-control signal authorizing the sub-station in question to transmit only a reduced-size packet in the time slot assigned thereto; and
   - a remote-control signal authorizing the sub-station in question to transmit in a normal fashion.

4. System implementing the method as defined in one of the Claims 1 to 3, constituted by a network comprising a central station and substations among which there are cascaded relay stations, the sub-stations comprising each a time-shifting means MD for shifting the instants of transmitting the information bits to the central station, the central station comprising a time-detecting means MR for detecting the order in which said information bits arrive, each station in the network comprising at least a transmit time-base and a receive time-base, which system is characterized in that the time-shifting means MD cooperates with the time-detecting means MR so that at the central station the initial adjustment of the delay of each sub-station is effected with an accuracy of one bit and in that, subsequently, the value of said imposed delay is initially increased in steps of 1/(2n-1) bit period until a jump of one bit period is obtained and finally decreased in n steps for the ideal adjustment of the interstation delay where n is strictly greater than 1.

**Patentansprüche**

1. Verfahren zur Verzögerungsregelung zwischen Stellen in einem Informationsübetragungssystem, wobei in einer Übertragungsrichtung das TDMA-Prinzip (Zeitmultipex mit Vielfachzugriff) angewandt wird, wobei dieses Übertragungssystem durch ein Netzwerk mit einer Hauptstelle und einer Anzahl Nebenstellen mit kaskadengeschalteten Relaisstellen gebildet ist, wobei die Nebenstellen Schiebemittel MD aufweisen zum Verschieben der Sendezeitpunkte der in Form von Bits zu der Hauptstelle gesendeten Informationen, wobei diese Hauptstelle Detektionsmittel MR aufweist zum Detektieren der Eintreffreihenfolge der genannten Informationen, wobei jede Stelle u.a. wenigstens eine Sende-Zeitbasis und eine Empfangs-Zeitbasis aufweist, dadurch gekennzeichnet, daß es bei den miteinander zusammenarbeitenden Mitteln zum Verschieben der Sendezeitpunkte der ausgesendeten Informationen und Mitteln zum Detektieren der Eintreffreihenfolge der genannten Informationen angewandt wird zum Regeln der der Sende-Zeitbasis der jeweiligen Stellen zuzuordnenden Verzögerung, wobei die Regelung der Verzögerung für jede Nebenstelle an der Hauptstelle zunächst auf ein Bit genau erfolgt, während die Verzögerung danach an der Nebenstelle um jeweils einen Schritt von 1/(2n-1) Bit vergrößert wird, bis ein Sprung von 1 Bit erreicht wird, wonach sie um n Schritte verringert wird zur idealen Regelung der Verzögerung zwischen Stellen, wobei die Zahl n unbedingt größer als 1 ist.

2. Verfahren zur Verzögerungsregelung zwischen Stellen nach Anspruch 1, dadurch gekennzeichnet, daß zur Regelung der Verzögerung einer Nebenstelle, die über eine Kaskadenschaltung von Relaisstellen mit der Hauptstelle Informationen austauscht, wobei das genannte Verfahren nacheinander und in einer bestimmten Reihenfolge angewandt wird auf die Verschiebungsmittel MD zum Verschieben der Sendezeitpunkte der von den jeweiligen kaskadengeschalteten Stellen gesendeten Informationen, die mit den Mitteln MR zum Detektieren der Eintreffreihenfolge der genannten Informationen an der Hauptstelle zusammenarbeiten, anfangend in dieser Reihenfolge bei der Relaisstelle, die der Hauptstelle am nächsten liegt, danach die Relaisstelle, die dann unmittelbar folgt und weiterhin endend an der betreffenden Nebenstelle.

3. Verfahren zur Verzögerungsregelung zwischen Stellen nach Anspruch 1 oder 2, dadurch gekennzeichnet, daß über die betreffende Datenstrecke von der Stelle, deren Verzögerung geregelt werden soll, die folgenden Informationen übertragen werden:
   - ein Fernsteuersignal, das jede Sendung von der betreffenden Stelle untersagt,
   - ein Fernsteuersignal, das der betreffenden Stelle erlaubt, nur ein Informationspaket geringen Umfangs in dem ihr zugeordneten Zeitschlitz zu senden,
   - ein Fernsteuersignal, das der betreffenden Stelle erlaubt, auf normale Weise zu senden.

4. System, bei dem das Verfahren nach einem der Ansprüche 1 bis 3 angewandt wird, und das durch ein Netzwerk mit einer Hauptstelle und einer Anzahl Nebenstellen mit kaskadengeschalteten Relaisstellen gebildet ist, wobei die Nebenstellen Schiebemittel MD aufweisen zum Verschieben der Sendezeitpunkte der in Form von Bits zu der Hauptstelle gesendeten Informationen, wobei diese Hauptstelle Detektionsmittel MR aufweist zum Detektieren der Eintreffreihenfolge der genannten Informationen, wobei jede Stelle u.a. wenigstens eine Sende-Zeitbasis und eine Empfangs-Zeitbasis aufweist, wobei dieses Verfahren dadurch gekennzeichnet ist, daß es bei den miteinander zusammenarbeitenden Mitteln zum Verschieben der Sendezeitpunkte der ausgesendeten Informationen und den Mitteln zum Detektieren der Eintreffreihenfolge der genannten Informationen angewandt wird zum Regeln der der Sende-Zeitbasis der jeweiligen Stellen zuzuordnenden Verzögerung, wobei die Regelung der Verzögerung für jede Nebenstelle an der Hauptstelle zunächst auf ein Bit genau erfolgt, und daß danach der Wert der geschätzten Verzögerung zunächst um jeweils einen Schritt von $1/(2n-1)$ Bit vergrößert wird, bis ein Sprung von 1 Bit erreicht wird, wonach sie um $n$ Schritte verringert wird zur idealen Regelung der Verzögerung zwischen Stellen, wobei die Zahl $n$ unbedingt größer als 1 ist.

FIG.1

FIG. 2

MT0     MT1

36IT

TR0 TR1 TR2 TR3 TR4   TR61 TR62 TR63 TR0

GR0 GR1 GR2   GR31 GR0

TGR0    TGR1

EP 0 277 380 B1

FIG.3

MXR

V/V

CS 5

8

B3

7

CS

9

TEL

10

6 B2

2 B1

3

4

IER

MXE

VER
V/V

DEC

B4

11

12

IRE

FIG.4

FIG.5

FIG.6

EP 0 277 380 B1

EP 0 277 380 B1

a
b
c
d
e
f
g
h
i
j
k
l

HM

DI1

DO1

DI2

DI3

DI4

DO4

DI5

DI6

DI7

DI8

$\theta$

FIG.7